# EUROPEAN PATENT APPLICATION

(11) **EP 2 207 304 A1**
(43) Date of publication of application: **14.07.2010**
(21) Application number: 08784120.1
(22) Date of filing: 25.08.2008
(51) Int. Cl.: H04L 12/02, G06F 1/16

(54) **GENERAL HARDWARE PLATFORM, CORRESPONDING ARCHITECTURE SYSTEM, AND POWER SUPPLY METHOD FOR ADVANCED MEZZANINE CARD**

(30) Priority: 30.10.2007 CN 200710164395
(71) Applicant: Huawei Technologies Co., Ltd., Longgang District, Shenzhen Guangdong 518129 (CN)
(72) Inventor: CHEN, Cheng, Guangdong 518129 (CN); HONG, Feng, Guangdong 518129 (CN); LI, Shanfu, Guangdong 518129 (CN); RAO, Longji, Guangdong 518129 (CN)
(74) Representative: Epping - Hermann - Fischer
(86) International application number: PCT/CN2008/072130
(87) International publication number: WO 2009/056020

(57) **Abstract**

A general hardware platform identifies power supply requirement information of advanced mezzanine cards (AMC) connected to a backplane through a platform management service system, and then supplies a desired function power to the AMC according to the requirements of the AMC. A corresponding general hardware platform architecture system and a power supply method for AMC are also provided.

## Description

The application claims the benefit of priority to China Patent Application No. 200710164395.9, filed on Oct. 30, 2007, and entitled "GENERAL HARDWARE PLATFORM, CORRESPONDING ARCHITECTURE SYSTEM, AND POWER SUPPLY METHOD FOR ADVANCED MEZZANINE CARD", which is incorporated herein by reference in its entirety.

### FIELD OF THE TECHNOLOGY

The present invention relates to a general hardware platform, a general hardware platform architecture system based on the platform, and a power supply method for advanced mezzanine card (AMC).

### BACKGROUND OF THE INVENTION

In order to satisfy the requirements of centralized computing and processing in telecommunications, computation, and other applications, based on characteristics of module application such as flexibility, generalization, and standardization, a telecommunications computing architecture (TCA) is proposed, which mainly includes an advanced TCA (ATCA) and a micro TCA (MTCA).

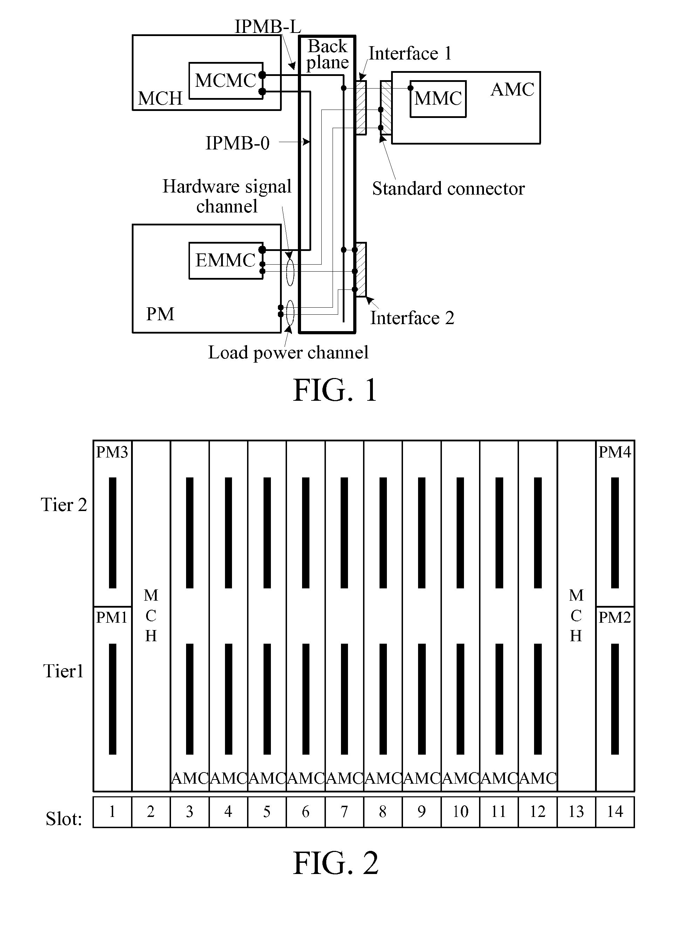

Taking the MTCA system for example, as shown in FIG. 1, a basic structure of the MTCA system includes an MTCA platform and advanced mezzanine cards (AMCs). The MTCA platform generally includes a frame and a platform management service system. The frame provides physical structure supports, power, and signal channels for each module in the system. The platform management service system provides a management and operating environment for the AMCs, and mainly includes an MTCA carrier hub (MCH) and a power module (PM). Referring to FIG. 1, each part of the MTCA system is described in the following.

The frame provides connection interfaces and connection channels for each module in the MTCA system through a backplane, including plug interfaces provided for the AMCs, for example, an interface 1 and an interface 2 in FIG. 1; intelligent platform management buses (IPMBs) connected to the MCH and other modules, for example, an IPMB-0 connected to the MCH and the PM and an IPMB-L connected to the MCH and the AMC; and hardware signal channels and load power channels connected to the PM and each of the plug interfaces. FIG. 2 shows an example of an arrangement of each module in a frame. The frame in FIG. 2 includes two tiers "Tier 2" and "Tier 1" being an upper tier and a lower tier respectively, and has 14 slots. Two PMs PM1 and PM3 located in Slot 1 respectively supply power to plug interfaces on Tier 1 and Tier 2. An MCH located in Slot 2 manages the PM1 and PM3 and AMCs. An MCH and PM2 and PM4 located in Slots 13 and 14 respectively are redundant to the MCH and the PM1 and PM3 located in Slots 2 and 1 respectively. Twenty plug interfaces at Slots 3 to 12 are provided for the AMCs. Apparently, the MCHs and the PMs may be connected to the frame by adopting pluggable modules. For ease of illustration, in the present invention, the plug interfaces are provided by the frame for the AMCs.

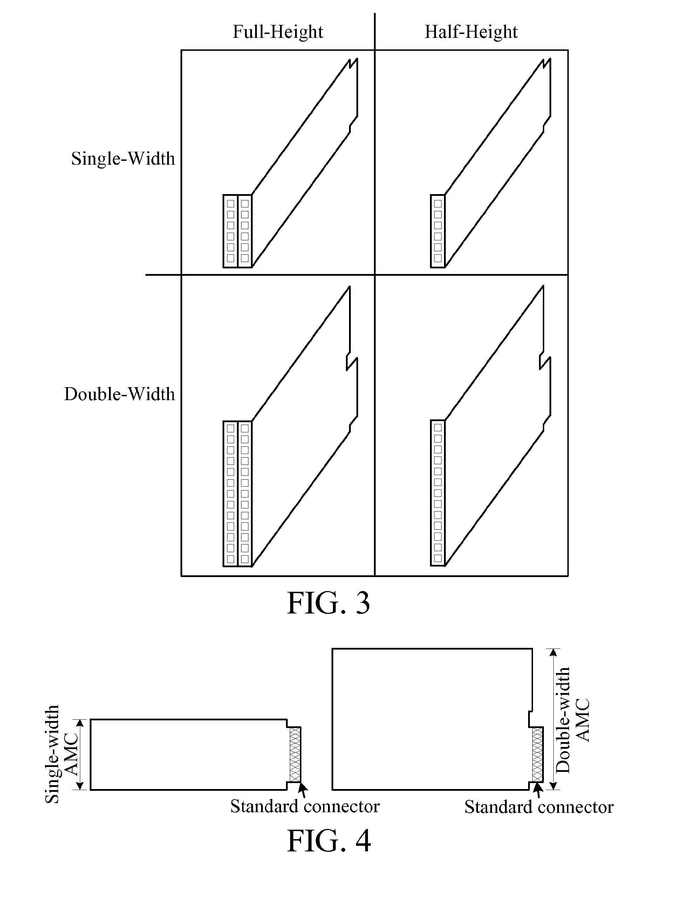

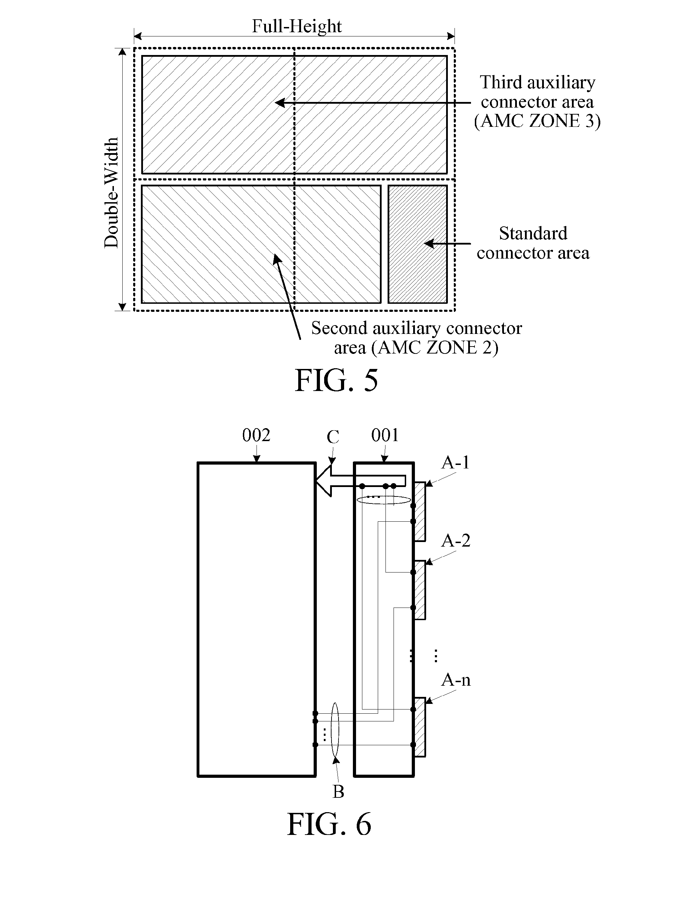

The AMC generally supports hot plugging, and is a field replaceable unit (FRU), including various types such as digital signal processing (DSP) AMC, central processing unit (CPU) AMC, network processor (NP) AMC, interface AMC, and storage AMC. The four commonly used specifications of the AMC are shown in FIG. 3, namely, double-width full-height, double-width half-height, single-width full-height, and single-width half-height. In the MTCA system, the AMC of different specifications may be mixedly configured, and the frame slots are assigned upon requirements. For example, Slots 3 and 4 in FIG. 2 may support one full-height double-width AMC, or two half-height double-width AMC, or one half-height double-width AMC plus two half-height single-width AMC, or four half-height single-width AMC. Recently, as shown in FIG. 4, a single-width or double-width AMC only provides one connector, that is, a standard connector 40, and the AMC may be directly plugged to the plug interface on the backplane of the frame through the standard connector 40. A standard connector area includes an interface for a load power channel, an interface for a hardware signal channel (for example, a present signal (PS) 1 for detecting the presence of the AMC), and an interface for a module management controller (MMC) on the AMC and the software signal channel IPMB-L. Detailed descriptions about pin definition and signal interaction of the stand connector area of the AMC may refer to the AMC.0 specification. In addition, referring to FIG. 5, a second auxiliary connector area (AMC ZONE 2) and a third auxiliary connector area (AMC ZONE 3) on which auxiliary connectors can be designed are further defined for the AMC.

The PM supplies a load power usually being +12 V to the AMC connected to each plug interface through the load power channel connected to the plug interface. Usually an enhanced module management controller (EMMC) is disposed on the PM, and the PM is enabled to supply a load power to the corresponding plug interface according to information such as an AMC present detection signal at the plug interface obtained from the hardware signal channel.

An MTCA carrier manager controller (MCMC) is disposed on the MCH. The MCMC is connected to the MMC of each AMC via the IPMB-L so as to realize the management of the MCH on the AMC, and is connected to the EMMC of the PM via the IPMB-0 so as to realize the management of the MCH on the PM.

During the research and implementation of the prior art, restricted to the definition of the standard connector of the AMC, a TCA platform adapted to the standard connector of the AMC and provided in the existing TCA system may not satisfy possible diversified function power requirements of the AMC (in the present invention, power requirements of the AMC other than the load power requirement are referred to as the function power requirements), for example, a power over Ethernet (POE) of +48 V and an alternating current (AC) ringing power of 90 V and 20 Hz, so that the expansion of the functions of the AMC is limited.

### SUMMARY OF THE INVENTION

Accordingly, the present invention is directed to a general hardware platform, a general hardware platform architecture system, and a power supply method for advanced mezzanine cards (AMCs) capable of flexibly satisfying function power requirements of the AMCs.

The present invention provides a general hardware platform, which includes a backplane and a platform management service system. The backplane is adapted to provide load power channels and signal channels. The platform management service system is adapted to obtain power supply requirement information of AMC plugged on the backplane through the signal channels, determine function power requirements of the AMC according to the power supply requirement information, and supply a function power to the AMC through the load power channels connected to the AMC according to the determined function power requirements.

The present invention also provides a general hardware platform architecture system, which includes a general hardware platform and AMC. The AMC includes a connector and a module management controller (MMC). The general hardware platform includes a backplane, a micro telecommunications computing architecture (MTCA) carrier hub (MCH), and a power module (PM). The backplane is adapted to provide load power channels, a first management bus (MB), and a second MB connected to the MCH and the PM. The connector is plugged to the backplane via one or more plug interfaces provided by the backplane. The MMC is adapted to provide power configuration information for the MCH through the connector. The MCH is adapted to obtain the power configuration information provided by the MMC via the first MB connected to the connector, and return the power configuration information to the PM via the second MB. The PM is adapted to determine function power requirements of the AMC according to the power configuration information, and supply a function power on the load power channel connected to the connector through the power channel according to the determined function power requirements.

The present invention further provides a power supply method for AMC, which includes the following steps. Power supply requirement information of AMC plugged on a backplane is obtained through signal channels provided by the backplane. Function power requirements of the AMC are determined according to the power supply requirement information. A corresponding function power is supplied to the AMC through load power channels connected to the AMC and provided by the backplane according to the determined function power requirements.

In above technical solutions, the power supply requirement information of the AMC connected to the backplane is identified through the platform management service system, and the desired function power is then supplied to the AMC according to the requirements of the AMC. Thereby, a power supply mode based on information identification is employed to flexibly output the function power, so as to fully satisfy possible diversified function power requirements of the AMC.

### BRIEF DESCRIPTION OF THE DRAWINGS

FIG. 1 is a schematic view of a basic structure of an existing MTCA system;
FIG. 2 is an exemplary view of an arrangement of each module in an existing frame;
FIG. 3 is a schematic view of existing AMC of various specifications;
FIG. 4 is a schematic view of standard connectors of the existing AMC;
FIG. 5 is a schematic view of definitions of connector areas of the existing AMC;
FIG. 6 is a schematic view of a basic structure of a general hardware platform according to an embodiment of the present invention;
FIG. 7 is a schematic view of a logical structure of a general hardware platform according to a first embodiment of the present invention;
FIG. 8 is a schematic view of a detailed logical structure of a PM according to the first embodiment of the present invention;
FIG. 9 is a schematic view of a logical structure of a general hardware platform architecture system according to the first embodiment of the present invention;
FIG. 10 is a schematic view of a logical structure of a general hardware platform according to a second embodiment of the present invention;
FIG. 11 is a schematic view of a detailed logical structure of the PM according to the second embodiment of the present invention;
FIG. 12 is a schematic view of a logical structure of the general hardware platform architecture system according to the second embodiment of the present invention;
FIG. 13 is a schematic view of a logical structure of a power conversion module of an AMC according to the second embodiment of the present invention;
FIG. 14 is a schematic view of a logical structure of an MTCA system according to a first example of the present invention; and
FIG. 15 is a schematic view of a logical structure of an MTCA system according to a second example of the present invention.

### DETAILED DESCRIPTION OF THE EMBODIMENTS

In an embodiment, the present invention provides a general hardware platform. Referring to FIG. 6, a basic structure of the general hardware platform includes a backplane 001 and a platform management service system 002.

The backplane 001 is adapted to provide load power channels B and a signal channel C. In the present invention, the load power channel refers to a power channel adapted to supply a load power on the backplane according to a general specification. The backplane 001 provides the load power channels B and the signal channel C for AMC through several plug interfaces A-1 to A-n. After being plugged to the backplane via one or more plug interfaces, the AMC are connected to the load power channels B and the signal channel C.

The platform management service system 002 is adapted to obtain power supply requirement information of the AMC plugged on the backplane through the signal channel C, determine function power requirements of the connected AMC according to the obtained power supply requirement information, and supply a desired function power to the AMC through the load power channels B connected to the AMC according to the determined function power requirements.

The basic structure of the general hardware platform is analyzed below. For ease of illustration, the AMC having the function power requirements are referred to as function AMC. A logical structure of the general hardware platform satisfies the following requirements.

### 1. Identifying the function AMC plugged on the backplane

The power supply requirement information adopted for identification may be obtained from a single plug interface or a plurality of plug interfaces. The power supply requirement information may be a software signal, a hardware signal, or an integration of the two types of signals. The content and connection mode of the power supply requirement information may be defined in the following two manners.
a. Special definition is performed. In this case, the backplane needs a special signal connection channel, and the corresponding function AMC requires an adapted auxiliary connector in addition to the existing standard connector. The auxiliary connector may be designed in a second auxiliary connector area or a third auxiliary connector area of the standard connector.
b. The definition is performed based on pins and a signal connection channel provided by the existing standard connector. In this case, the structure of the backplane does not need to be changed. Particularly, the following two circumstances exist based on the manner of using the plug interface adapted to the standard connector and provided on the backplane by the function AMC.
b1. The function AMC provides the power supply requirement information by multiplexing signals and pins provided by the standard connector of the AMC itself. Here, the backplane only needs to provide a plug interface adapted to the standard connector for the function AMC. In the present invention, the plug interface adapted to the standard connector of the AMC is referred to as a standard interface for short.
b2. The function AMC provides the power supply requirement information by designing an auxiliary connector in the second auxiliary connector area or the third auxiliary connector area of the standard connector. In this case, the backplane needs to provide two standard interfaces for the function AMC.

### 2. Supplying the function power to the function AMC

A special PM may be used, or an output capacity of the original PM for supplying a load power may be expanded for supplying the function power. In the present invention, the backplane outputs the function power in a manner of sharing the load power channels. In this case, the structure of the backplane does not need to be changed. The function AMC obtains the function power by multiplexing the load power channel provided for the standard connector of the AMC itself, and obtains the load power by converting the input function power. Here, in combination of the above circumstance b1, the backplane only provides one standard interface for the function AMC. Definitely, the function AMC may also input the function power through the auxiliary connector designed in the second auxiliary connector area or the third auxiliary connector area of the standard connector. In this case, in combination of the above circumstance b2, the backplane provides two standard interfaces for the function AMC.

Definitely, different identification and power supply modes may be integrated in the same general hardware platform. For example, various types of plug interfaces are configured on the backplane, and are respectively managed depending on their types. The plug interface may be classified into: a plug interface (which is compatible with a common AMC using a standard connector) provided for a function AMC only using one standard connector, a plug interface combination (the two plug interfaces in this combination are both compatible with a common AMC using a standard connector) provided for a function AMC using one standard connector and one auxiliary connector (the auxiliary connector is compatible with the design of the standard connector), and a plug interface combination provided for a function AMC using one standard connector and one auxiliary connector (the auxiliary connector is incompatible with the design of the standard connector).

The power supply method for the AMC performed by the general hardware platform may be concluded as follows. The power supply requirement information of the AMC plugged on the backplane is obtained through the signal channel provided by the backplane. The function power requirements of the AMC are determined according to the power supply requirement information. The corresponding function power is supplied to the AMC through the load power channels connected to the AMC and provided by the backplane according to the determined function power requirements.

The general hardware platform based on the above basic structure and the general hardware platform architecture system are further described in detail below.

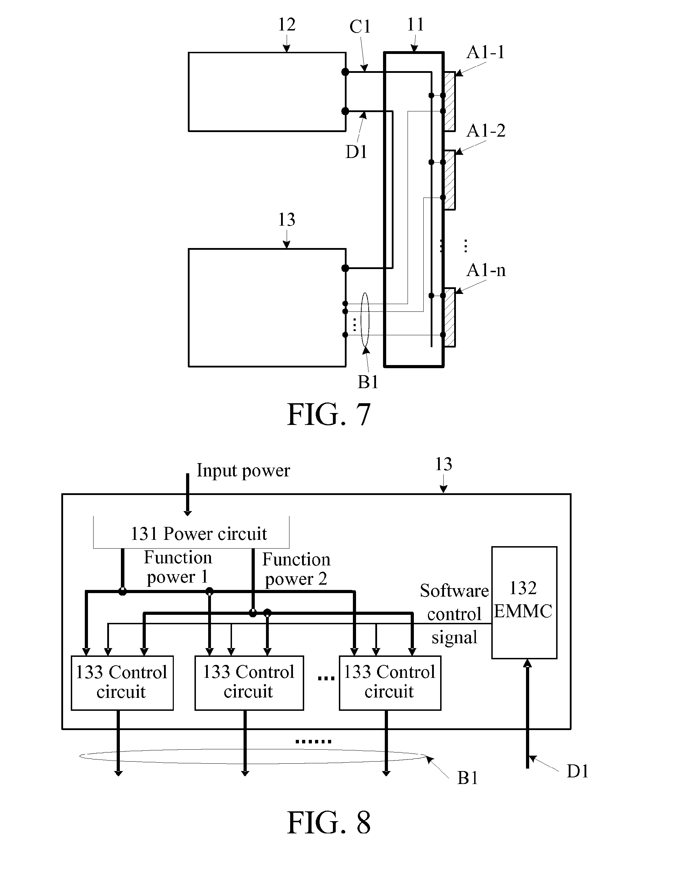

In a first embodiment, a general hardware platform is provided. The general hardware platform in this embodiment provides software signal channels to transmit power supply requirement information of the AMC. Referring to FIG. 7, a logical structure of the general hardware platform includes a backplane 11 and a platform management service system, and the platform management service system includes an MCH 12 and a PM 13.

The backplane 11 is adapted to provide load power channels B1 and a first MB C1, and provide a second MB D1 connected to the MCH 12 and the PM 13. The backplane 11 provides the load power channels B1 and the first MB C1 for the AMC through several plug interfaces A1-1 to A1-n.

The MCH 12 is adapted to obtain power configuration information of the AMC via the first MB C1 connected to the AMC, and return the obtained power configuration information to the PM 13 via the second MB D1. As the AMC may be plugged to the backplane 11 via one or more plug interfaces, for ease of illustration, it is assumed that one of the plug interfaces adopted by the AMC is a "first interface", and the MCH 12 obtains the power configuration information of the AMC via the first MB C1 assigned for the first interface.

The PM 13 is adapted to determine a function power requirement of the AMC connected to the first interface according to the power configuration information provided by the MCH 12, and supply a corresponding function power to the AMC through the load power channel B1 connected to the AMC according to the determined function power requirement. Definitely, the load power channel B1, through which the function power is supplied to the AMC, may be selected as a load power channel assigned for the first interface or other load power channels assigned for other plug interfaces connected to the AMC.

Specifically, the PM 13 may adopt a structure shown in FIG. 8. Referring to FIG. 8, the PM 13 includes a power circuit 131, an EMMC 132, and a control circuit 133.

The power circuit 131 is adapted to convert the input power, and the converted power includes one or more function powers.

The EMMC 132 is adapted to obtain the power configuration information of the AMC via the second MB D1, determine the function power requirement of the AMC according to the obtained power configuration information, and generate a software control signal according to the determined function power requirement.

The control circuit 133 is adapted to supply a corresponding converted power to a certain load power channel B1 connected to the AMC according to the software control signal from the EMMC 132.

The PM 13 may only output the function power, or compatibly output the load power. In this case, a certain function power output by the power circuit 131 in FIG. 8 is replaced by a 12 V load power output, and the load power channel B1 is selected to output the function power and the load power.

The structure of the general hardware platform of this embodiment is analyzed as follows.

### 1. Identifying the function AMC plugged on the backplane

The first MB C1 provided by the backplane 11 serves as a software signal channel, through which the power supply requirement information of the AMC is obtained, and the first MB C1 may be defined based on an existing software signal channel IPMB-L. In this manner, the design of the part related to the identification of the function AMC in the first interface is compatible with the design of the existing standard interface. The second MB D1 provided by the backplane 11 may be defined based on an existing software signal channel IPMB-0, and an MCMC of the MCH 12 communicates with the EMMC of the PM 13 in a manner as defined by the IPMB-0.

The MCH 12 reads FRU information stored in the AMC by communicating with the MMC of the AMC in a manner as defined by the IPMB-L. In the function AMC, the FRU information includes newly added power configuration information, and the detailed content may be identity information or other configuration information of the desired function power of the function AMC.

### 2. Supplying the function power to the function AMC

In this embodiment, the general hardware platform obtains identification information of the function AMC via the first MB assigned for the first interface, and supplies the function power to the function AMC through the load power channel assigned for another plug interface (which is assumed to be a second interface). In this case, the first interface may be designed according to the standard interface, and the second interface may be designed according to the standard interface (the load power channel is selected to output the load power and the function power); or, the first and second interfaces may be specially designed. Based on the specification of the existing AMC, the second interface may be located in a second auxiliary connector area of the first interface, and the corresponding function AMC is of full-height. Alternatively, the second interface may be located in a third auxiliary connector area of the first interface, and the corresponding function AMC is of double-width.

In this embodiment, the general hardware platform may not only obtain the identification information of the function AMC through the first interface, but also supply the function power for the function AMC through the first interface. In this case, the load power channel is selected to output the load power and the function power, the first interface is designed according to the standard interface, and only the corresponding function AMC requires a power conversion circuit designed to convert the input function power into the load power, so as to satisfy the load power requirement. With this structure, the function AMC does not need an auxiliary connector.

Seen from the above analysis of the general hardware platform, the plug interfaces provided by the backplane include different types, and not all the plug interfaces need to be connected to C1. For example, if certain plug interfaces on the backplane are specially adapted to supply the function power to the function AMC, the plug interfaces of this type do not need to perform a software signal interaction with the platform service system, and thus may not support the connection to C1.

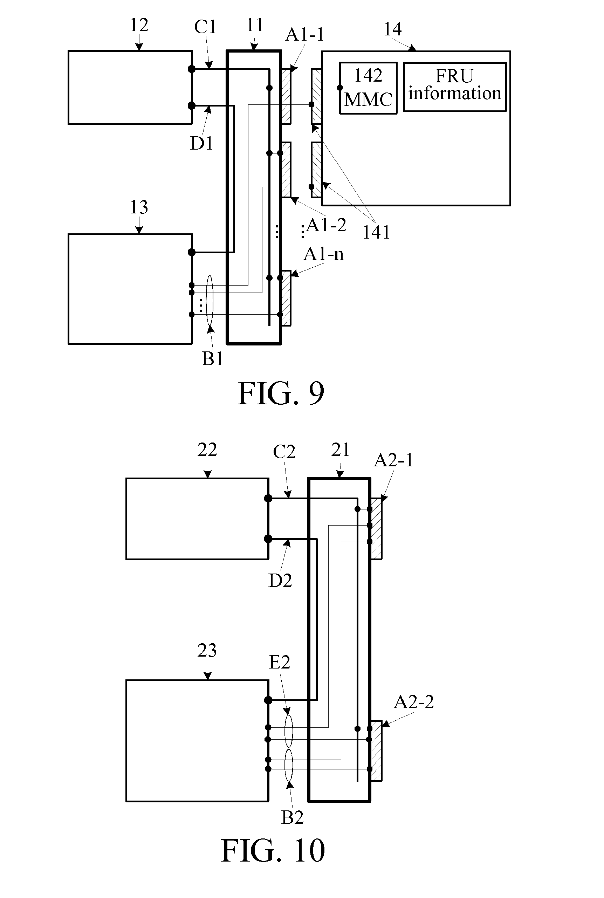

A general hardware platform architecture system based on the general hardware platform of the first embodiment is given below. Referring to FIG. 9, the general hardware platform architecture system includes a general hardware platform and AMC 14. The general hardware platform adopts the structure in the first embodiment, and includes a backplane 11, an MCH 12, and a PM 13. The AMC 14 includes connectors 141 and an MMC 142.

The backplane 11 is adapted to provide load power channels B1 and a first MB C1, and provide a second MB D1 connected to the MCH 12 and the PM 13.

The connectors 141 are plugged to the backplane 11 via one or more plug interfaces provided by the backplane 11.

The MMC 142 is adapted to provide power configuration information for the MCH 12 in a manner of providing FRU information through the connectors 141.

The MCH 12 is adapted to obtain the power configuration information provided by the MMC 142 via the first MB C1 connected to the connectors 141, and return the obtained power configuration information to the PM 13 via the second MB D1.

The PM 13 is adapted to determine function power requirements of the AMC 14 according to the obtained power configuration information, and supply a corresponding function power on the load power channels connected to the connectors 141 through the power channels B1 according to the determined function power requirements.

Based on the structure of the general hardware platform provided in the first embodiment, the connectors 141 may adopt a structure consisting of one standard connector, or a structure consisting of one standard connector and one auxiliary connector (the auxiliary connector is located in the second or the third auxiliary connector area, and is compatible with the design of the standard connector), or a structure consisting of one standard connector and one auxiliary connector (the auxiliary connector is located in the second or the third auxiliary connector area, but is incompatible with the design of the standard connector). In FIG. 9, A1-1 serves as the first interface, through which the power configuration information of the AMC is obtained, and the connector 141 exemplarily adopts the structure consisting of one standard connector and one auxiliary connector compatible with the design of the standard connector. In this manner, B1 may be selected to output the load power and the function power, so as to supply the load power for the standard connector connected to the A1-1. Therefore, in FIG. 9, a connection relation between B1 and the standard connector is shown.

In this embodiment, in the platform management service system, the power supply requirement information of the AMC plugged on the backplane is identified through the software signal channels, so as to supply the desired function power to the AMC according to the requirements of the AMC. The power supply mode based on the information identification is adopted, so as to flexibly output the function power, thereby fully satisfying possible diversified function power requirements of the AMC. Meanwhile, the transmission of the software identification signal and the supply of the function power may be designed compatible with the definition of the existing standard interface, so that the existing device does not need to be changed too much, and this design is easy to be realized.

In a second embodiment, a general hardware platform is provided. As compared with the first embodiment, the general hardware platform of this embodiment provides hardware signal channels to transmit the power supply requirement information of the AMC in addition to the software signal channels. Referring to FIG. 10, a logical structure of the general hardware platform includes a backplane 21 and a platform management service system. The platform management service system of this embodiment includes an MCH 22 and a PM 23.

The backplane 21 is adapted to provide load power channels B2, a first MB C2, and hardware signal channels E2, and provide a second MB D2 connected to the MCH 22 and the PM 23. The backplane 21 provides the load power channels B2 and the first MB C2 for the AMC through several plug interfaces, and two plug interfaces A2-1 and A2-2 are exemplarily shown in FIG. 10.

The MCH 22 is adapted to obtain power configuration information of the AMC via the first MB C2 connected to the AMC, and return the obtained power configuration information to the PM 23 via the second MB D2. As the AMC may be plugged to the backplane 21 via one or more plug interfaces, for ease of illustration, it is assumed that one of the plug interfaces adopted by the AMC is a "first interface", and the MCH 22 obtains the power configuration information of the AMC via the first MB C2 assigned for the first interface.

The PM 23 is adapted to obtain a present detection signal of the AMC through the hardware signal channel E2 connected to the AMC, determine whether to supply a corresponding function power or not on the load power channel B2 assigned for the same plug interface as the hardware signal channel E2 that provides the present detection signal according to the power configuration information provided by the MCH 22 and the present detection signal obtained through the hardware signal channel E2, and supply the corresponding function power on the load power channel B2 according to a determination result. It is assumed that the hardware signal channel E2 providing the present detection signal of the AMC is assigned for the second interface, and the second interface and the first interface may be the same plug interface, or the second interface may be a plug interface other than the first interface. In the latter circumstance, an association relation between the first interface and the second interface may be determined according to a preset slot assignment mode. For example, for a backplane having a double-tier structure, two neighboring plug interfaces respectively located on an upper and a lower tier of the backplane serve as a first interface and a second interface, and a corresponding function AMC adopts a double-width specification and has a standard connector and an auxiliary connector located in a third auxiliary connector area. Alternatively, two neighboring plug interfaces located on the same tier of the backplane may serve as a first interface and a second interface, and a corresponding function AMC adopts a full-height specification and has a standard connector and an auxiliary connector located in a second auxiliary connector area. For ease of illustration, in FIG. 10, A2-1 serves as the first interface, andA2-2 serves as the second interface.

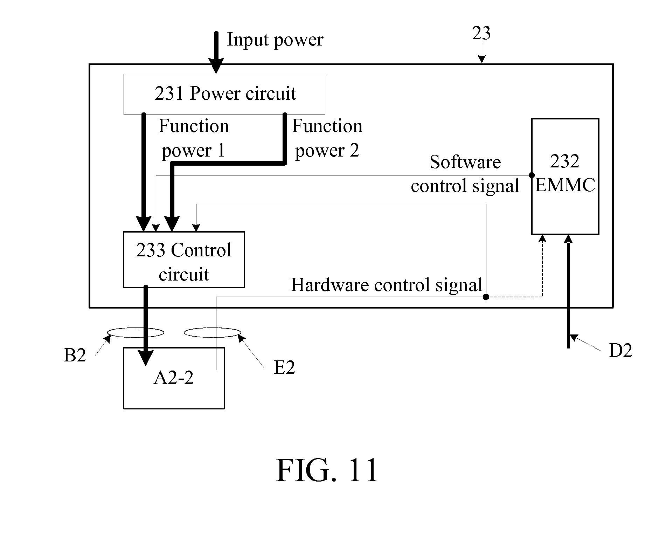

Specifically, the PM 23 may adopt a structure shown in FIG. 11. Referring to FIG. 11, the PM 23 includes a power circuit 231, an EMMC 232, and a control circuit 233.

The power circuit 231 is adapted to convert the input power, and the converted power includes one or more function powers.

The EMMC 232 is adapted to obtain the power configuration information of the AMC via the second MB D2, determine the function power requirement of the AMC according to the obtained power configuration information, and generate a software control signal according to the determined function power requirement.

The control circuit 233 is adapted to obtain a present detection signal of the AMC plugged to the second interface A2-2 through the hardware signal channel E2 assigned for the second interface A2-2, and is adapted to supply a corresponding converted power to the AMC through the load power channel B2 assigned for the second interface A2-2 according to the software control signal of the EMMC 132 and the present detection signal on the second interface A2-2.

For ease of illustration, FIG. 11 only shows an output from the PM 23 to one plug interface, and the circumstance of a plurality of plug interfaces may be deduced in the same manner. Further, in order to improve the reliability of the power output control, the present detection signal provided by the hard signal channel E2 is also provided to the EMMC 232, and serves as a reference with the power configuration information for determining the function power requirement of the AMC. This part of connections is marked by dashed lines in FIG. 11.

Similar to the first embodiment, the PM 23 may only output the function power, or compatibly output the load power. In this case, a certain function power output by the power circuit 231 in FIG. 11 is replaced by a 12 V load power output. Definitely, the corresponding EMMC 232 may also generate the software control signal adapted to control the load power output. In this case, the load power channel B2 assigned for the second interface A2-2 is shared by the function power and the load power. The control circuit 233 selects to output the load power or the function power on the power channel B2 assigned for the second interface A2-2 according to the software control signal and the present detection signal.

The structure of the general hardware platform of this embodiment is analyzed as follows.

### 1. Identifying the function AMC plugged on the backplane

In this embodiment, the analysis on the obtaining of the power supply requirement information from the software signal channel C2 is similar to that of the first embodiment. The hardware signal channels E2 adapted to transmit the present detection signals and provided by the backplane 21 may be defined based on an existing PS1 that detects the presence of the AMC. In this manner, the design of the part related to the identification of the function AMC in the second interface A2-2 is compatible with the design of the existing standard interface. As the PS1 is adapted to define a standard slot, the hardware signal channel E2 is also connected to the first interface A2-1 in FIG. 10. Apparently, when the first interface and the second interface are the same plug interface, that is, the software and hardware channels adapted to identify the function AMC are assigned for the same plug interface, the plug interface may also be compatible with the design of the existing standard interface.

### 2. Supplying the function power to the function AMC

In this embodiment, the analysis of the function power is similar to that of the first embodiment, so the details thereof may not be described herein again.

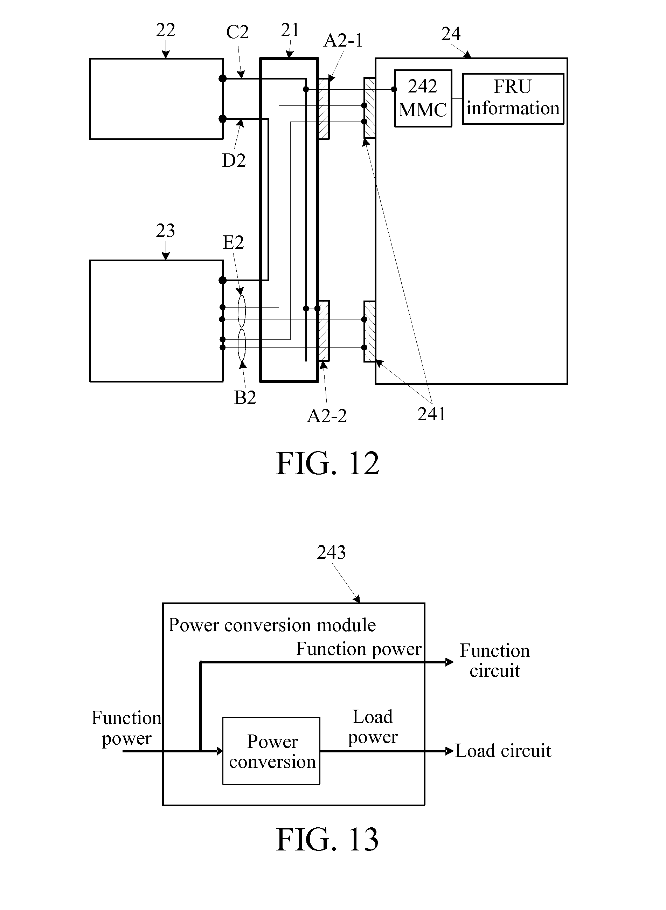

A general hardware platform architecture system based on the general hardware platform of the second embodiment is provided as follows. Referring to FIG. 12, the general hardware platform architecture system includes a general hardware platform and AMC 24. The general hardware platform adopts the structure in the second embodiment, and includes a backplane 21, an MCH 22, and a PM 23. The AMC 24 includes connectors 241 and an MMC 242.

The backplane 21 is adapted to provide load power channels B2, a first MB C2, and hardware signal channels E2, and provide a second MB D2 connected to the MCH 22 and the PM 23.

The connectors 241 are plugged to the backplane 21 via one or more plug interfaces provided by the backplane 21.

The MMC 242 is adapted to provide power configuration information for the MCH 22 in a manner of providing FRU information through the connectors 241.

The MCH 22 is adapted to obtain the power configuration information provided by the MMC 242 via the first MB C2 connected to the connectors 241, and return the obtained power configuration information to the PM 23 via the second MB D2.

The PM 23 is adapted to obtain a present detection signal of the AMC through the hardware signal channel E2 connected to the connector 241, determine whether to supply a corresponding function power or not on the load power channel B2 assigned for the same plug interface as the hardware signal channel E2 that provides the present detection signal according to the obtained power configuration information and the obtained present detection signal of the AMC, and supply the corresponding function power on the load power channel B2 according to a determination result. It is assumed that the first MB C2 adapted to obtain the power configuration information of the AMC is assigned for the first interface, and the hardware signal channel E2 adapted to provide the present detection signal of the AMC is assigned for the second interface. The following two circumstances may occur.

### 1. The second interface is a plug interface other than the first interface.

In this case, the connector 241 includes one standard connector and one auxiliary connector. The auxiliary connector is located in a second auxiliary connector area or a third auxiliary connector area of the standard connector. The standard connector is adapted to provide a connection interface assigned for the first interface, and the auxiliary connector is adapted to provide a connection interface assigned for the second interface. The above circumstance is shown in FIG. 12, and it is assumed that B2 may select to output the function power or the load power, so that the first interface A2-1 is connected to B2.

### 2. The second interface and the first interface are the same plug interface.

In this case, the AMC 24 further requires a power conversion module 243. A schematic view of the power conversion module 243 is shown in FIG. 13. The power conversion module 243 is adapted to convert the function power input by the connector 241, and the converted power includes the load power and the function power, which are respectively supplied to the corresponding function circuits and load circuits.

In this embodiment, in the platform management service system, the power supply requirement information of the AMC plugged on the backplane is identified through the software and hardware signal channels, so as to supply the desired function power to the AMC according to the requirements of the AMC. The power supply mode based on the information identification is adopted, so as to flexibly output the function power, thereby fully satisfying possible diversified function power requirements of the AMC. Meanwhile, the transmission of the software identification signal and the supply of the function power may be designed compatible with the definition of the existing standard interface, so that the existing device does not need to be changed too much, and this design is easy to be realized.

In order to better understand the second embodiment, examples of actual applications are given below, in which two circumstances that the first interface and the second interface are not the same plug interface and are the same plug interface are described. In these examples, it is assumed that the function power requirement of the function AMC is a POE of +48 V.

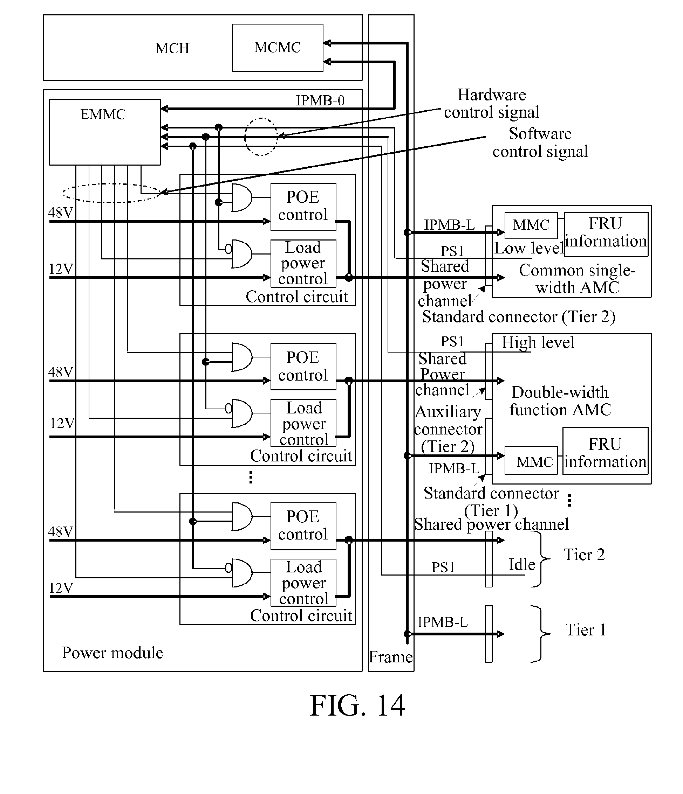

In a first example, FIG. 14 is a schematic view of a logical structure of an MTCA system applicable to a function AMC of the double-width specification.

The backplane of the MTCA system has a double-tier structure, the two neighboring plug interfaces respectively located on an upper and a lower tier serve as a first interface and a second interface, the plug interface of the upper tier Tier 2 serves as the second interface, the plug interface of the lower tier Tier 1 serves as the first interface, and all the plug interfaces are compatible with the design of the standard interface. The connectors of the corresponding function AMC include one standard connector and one auxiliary connector compatible with the design of the standard connector. The auxiliary connector is located in an AMC ZONE 3 connector area of the standard connector, and provides connections to POE channels and hardware control signals. The manner of supporting the POE function in the function AMC is designed according to the 802.3af standard of Institute of Electrical and Electronics Engineers (IEEE), and is not limited herein. As the auxiliary connector does not need to support the IPMB-L, the IPMB-L connected to the plug interface of the auxiliary connector on Tier 2 is not shown in FIG. 14. Besides, the analysis of the example does not concern the PS1 and the power supply mode on Tier 1, so that the hardware signal channels and the PM on Tier 1 are not shown in FIG. 14.

Referring to FIG. 14, the management and control of the system of this example is described in detail below.

FIG. 14 shows the connections of a common single-width AMC located on Tier 2, the connections of a double-width function AMC, and the connections of two idle plug interfaces respectively located on Tier 1 and Tier 2.

The hardware channels adapted to transmit the PS1 (hereinafter referred to as PS1 channels) are respectively connected to each plug interface and the PM on Tier 2, and the PS1 is pulled up in the PM. When the common single-width AMC is plugged to a certain plug interface, the PS1 line is pulled down to a low level in the common single-width AMC. Thereby, on detecting that a certain PS1 line is at a low level, the EMMC of the PM determines that the common single-width AMC is plugged to the plug interface, so as to control the load power output to the AMC.

In this example, it is determined whether the double-width function AMC is plugged in or not by using different levels of the PS1, that is, the PS1 is pulled up to a high level in the double-width function AMC. When the EMMC of the PM detects that a certain PS1 is at a high level, the double-width function AMC may be plugged to the plug interface or the plug interface is idle. In this case, the two possible circumstances need to be distinguished through the connection of the double-width function AMC on Tier 1, for example, the connection via the IPMB-L. The MCH reads slot application information on Tier 1 via the IPMB-L. For the double-width function AMC, the power configuration information related to the POE is saved in the FRU information. The MMC of the double-width function AMC reads the power configuration information, communicates with the MCMC of the MCH via the IPMB-L, and returns the power configuration information to the MCH so as to inform the MCH that the double-width POE module is plugged to the plug interface. The MCMC of the MCH returns the power configuration information to the EMMC of the PM via the IPMB-0. Taking both the level of the PS1 and the power configuration information obtained through communication via the IPMB into account, the EMMC may accurately determine whether the double-width function AMC is plugged to a certain plug interface or not.

In the case of an idle plug interface on Tier 2, although the PS 1 is at a high level, the MCH cannot read the power configuration information from the corresponding plug interface at Tier 1 via the IPMB-L, and thus the MCH figures out that the plug double-width function AMC is not plugged to the plug interface. Thereby, the MCMC of the MCH notifies the information to the EMMC of the PM via the IPMB-0. By analyzing both the PS1 and the IPMB interactive information, the PM determines whether a slot on Tier 2 is idle or not.

In this example, in addition to being input to the EMMC for determining the type of the plugged AMC, the PS1 also serves as a hardware control signal respectively connected to the control circuit of each power (including a POE control part and a load power control part). The PS 1 at a high level is a hardware control condition for turning on the POE, and the PS1 at a low level is a hardware control condition for turning on the load power. In addition, the EMMC outputs the software control signal after determining the type of the plugged AMC according to the status of the PS1 and the information obtained through communication via the IPMB, so as to control the ON/OFF of the POE and the load power (the software control signal may adopt a POE enable signal POE_EN and a load power enable signal POW_EN, the POE_EN at a high level is a software control condition for turning on the POE, and the POW_EN at a high level is a software control condition for turning on the load power). The relation between the software/hardware control signal and the power output is shown in Table 1, in which 0 indicates a low level, and 1 indicates a high level.

**Table 1**

| PS1 | POE_EN | POW_EN | Power Output | Descriptions |
|---|---|---|---|---|
| 0 | 0 | 0 | All the powers are turned off; no output | Normal |
| 0 | 0 | 1 | A load power of 12 V is output | Normal (a common single-width AMC is plugged in) |
| 0 | 1 | 0 | - | Abnormal; not allowed |
| 0 | 1 | 1 | - | Abnormal; not allowed |
| 1 | 0 | 0 | All the powers are turned off; no output | Normal |
| 1 | 0 | 1 | - | Abnormal; not allowed |
| 1 | 1 | 0 | APOE of 48 V is output | Normal (a double-width function AMC is plugged in) |
| 1 | 1 | 1 | - | Abnormal; not allowed |

In view of the above, the management and control of the POE output on Tier 2 performed by the MTCA system in this example are described as follows.
1. The PM detects the PS1, and obtains a level state of the PS1. When the PS1 is at a low level, it is determined that a common single-width AMC is plugged in. When the PS 1 is at a high level, it is determined whether a double-width function AMC is plugged in or no AMC is plugged in, which is implemented in the following two steps.
   a) The PM requires the MCH to read information about a module connected to the corresponding plug interface on Tier 1. The MCH communicates with the module located on Tier 1 via the IPMB-L connected to the corresponding plug interface on Tier 1, and returns the information to the PM via the IPMB-0.
   b) The PM determines whether the double-width function AMC is plugged to the plug interface on Tier 2 or the plug interface on Tier 2 is in an idle state or not according to the information returned by the MCH, for example, whether the POE configuration information exists or not.
2. The PM outputs the corresponding software control signal according to the determination of the type of the plugged AMC, controls the power control circuit together with the hardware control signal, and outputs the power required by the AMC to the shared power channel.

In this example, the POE supply is realized by using the AMC ZONE 3 auxiliary connector area. In actual applications, the POE supply may also be realized by using the AMC ZONE 2 auxiliary connector area. In this case, the first interface and the second interface are two neighboring plug interfaces located on the same tier, the corresponding function AMC adopt the full-height specification, and the connection and control modes may refer to the design of this example, which may not be described herein again.

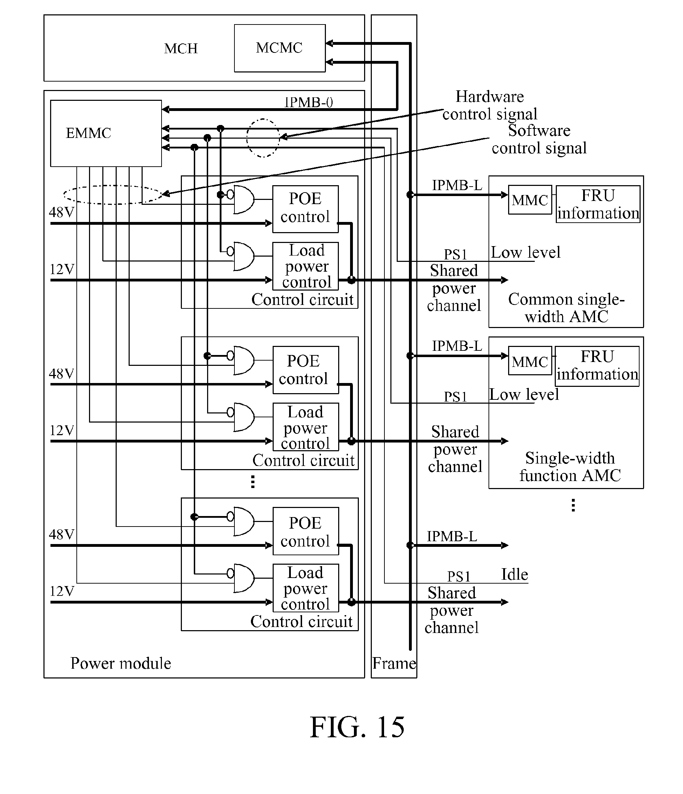

In a second example, FIG. 15 is a schematic view of a logical structure of an MTCA system applicable to a function AMC using a single standard connector.

The plug interfaces on the backplane of the MTCA system and the connectors of the corresponding function AMC are compatible to the definition of the standard AMC connector area. Referring to FIG. 15, the management and control of the system of this example is described in detail below.

FIG. 15 shows the connections of a common single-width AMC, the connections of a single-width function AMC, and the connections of an idle plug interface.

The PS 1 channels are respectively connected to each plug interface and the PM. The PS1 is pulled up in the PM, but pulled down to a low level in the common single-width AMC and the single-width function AMC, so that when the EMMC of the PM detects that a certain PS1 line is at a low level, the common single-width AMC or the single-width function AMC is plugged to the plug interface.

Thereby, for the single-width function AMC, the power configuration information related to the POE is saved in the FRU information. The MMC of the single-width function AMC reads the power configuration information, communicates with the MCMC of the MCH via the IPMB-L, and returns the power configuration information to the MCH so as to inform the MCH that the single-width POE module is plugged to the plug interface. The MCMC of the MCH returns the power configuration information to the EMMC of the PM via the IPMB-0. Taking both the level of the PS1 and the power configuration information obtained through communication via the IPMB into account, the EMMC may accurately determine whether the common single-width AMC or the single-width function AMC is plugged to a certain plug interface.

In this example, the control mode of the output power in the PM is the same as that of the first example, so the details thereof may not be descibed herein again. The relation between the software/hardware control signal and the power output is shown in Table 2, in which 0 indicates a low level, and 1 indicates a high level.

**Table 2**

| PS1 | POE EN | POW-EN | Power Output | Descriptions |
|---|---|---|---|---|
| 0 | 0 | 0 | All the powers are turned off; no output | Normal |
| 0 | 0 | 1 | A load power of 12 V is output | Normal; a common single-width AMC is plugged in |
| 0 | 1 | 0 | A POE of 48 V is output | Normal; a single-width function AMC is plugged in |
| 0 | 1 | 1 | - | Abnormal; not allowed |
| 1 | - | - | All the powers are turned off; no output | Normal |

Apparently, when the single-width function AMC is plugged in, the single-width function AMC can only obtain a POE of 48 V from the shared power channel. Therefore, the single-width function AMC requires a power conversion circuit to obtain the desired load power by converting the POE of 48 V.

In view of the above, the management and control of the POE output by the MTCA system in this example are described as follows.
1. The PM detects the PS1, and obtains a level state of the PS1. When the PS1 is at a low level, it is determined whether a common single-width AMC or a single-width function AMC is plugged in. When the PS 1 is at a high level, it is determined that no AMC is plugged in.
2. When the PS1 is at a low level, the PM requires the MCH to read information about a module connected to the corresponding plug interface. The MCH communicates with the module via the IPMB-L connected to the corresponding plug interface, and returns the information about the module to the PM via the IPMB-0.
3. The PM determines whether the common single-width AMC or the single-width function AMC is plugged to the plug interface according to the information about the module returned by the MCH, for example, whether the POE configuration information exists or not.
4. The PM outputs the corresponding software control signal according to the determination of the type of the plugged AMC, controls the power control circuit together with the hardware control signal, and outputs the power required by the AMC to the shared power channel.

Seen from the above embodiments of the present invention, in the platform management service system, the power supply requirement information of the AMC connected to the backplane is identified, so as to supply the desired function power to the AMC according to the requirements of the AMC. In the general hardware platform, the power supply mode based on the information identification is adopted, so as to flexibly output the function power, thereby fully satisfying possible diversified function power requirements of the AMC. Meanwhile, the transmission of the software/hardware identification signal and the supply of the function power may be designed compatible with the definition of the existing standard interface, so that the existing device does not need to be changed too much, and this design is easy to be realized.

Those of ordinary skill in the art should understand that that all of or a part of processes in the method according to the embodiments may be implemented by a computer program instructing relevant hardware. The program may be stored in a computer readable storage medium. When the program is executed, the processes of the method according to the embodiments of the present invention are performed. The storage medium may be a magnetic disk, an optical disk, a read-only memory (ROM), or a random access memory (RAM).

The general hardware platform and the general hardware platform architecture system of the present invention are described in detail above. The principle and implementation of the present invention are described herein through specific examples. The description about the embodiments of the present invention is merely provided for ease of understanding of the method and core ideas of the present invention. Those of ordinary skill in the art can make variations and modifications to the present invention in terms of the specific implementations and application scopes according to the ideas of the present invention. Therefore, the specification shall not be construed as limitations to the present invention.

## Claims

1. A general hardware platform, comprising a backplane and a platform management service system, **characterized in that**,
the backplane is adapted to provide load power channels and signal channels;
the platform management service system is adapted to obtain power supply requirement information of advanced mezzanine card (AMC) plugged on the backplane through the signal channels, determine function power requirements of the AMC according to the power supply requirement information, and supply a function power to the AMC through the load power channels connected to the AMC according to the determined function power requirements.

2. The general hardware platform according to claim 1, **characterized in that**, the platform management service system is adapted to further supply a load power;
the step of supplying a function power to the AMC through the load power channels connected to the AMC according to the determined function power requirements, further comprising: supplying the load power or the function power to the AMC through the load power channels connected to the AMC according to the determined function power requirements.

3. The general hardware platform according to claim 1 or 2, **characterized in that**, the platform management service system further comprises a MTCA Carrier Hub (MCH) and a power module (PM);
the backplane is adapted to provide a first management bus (a first MB) and a second management bus (a second MB), wherein the first MB is connected to the AMC, the second MB is connected to the MCH and the PM, the power supply requirement information comprises power configuration information of the AMC;
the MCH is adapted to obtain power configuration information of the AMC via the first MB connected to the AMC, and return the obtained power configuration information to the PM via the second MB; and
the PM is adapted to determine a function power requirement of the AMC according to the power configuration information provided by the MCH, and supply the function power to the AMC through the load power channels connected to the AMC according to the determined function power requirement.

4. The general hardware platform according to claim 3, **characterized in that** the PM further comprises:
a power circuit, adapted to convert an input power, the converted power comprising one or more function powers;
an enhanced module management controller (EMMC), adapted to obtain the power configuration information of the AMC via the second MB, determine the function power requirement of the AMC according to the obtained power configuration information, and generate a software control signal according to the determined function power requirement; and
a control circuit, adapted to supply the converted power to the load power channel connected to the AMC according to the software control signal from the EMMC.

5. The general hardware platform according to claim 3, **characterized in that** the backplane is further adapted to provide a hardware signal channels, the power supply requirement information further comprises a present detection signal of the AMC, and the AMC is plugged to the backplane via one or more plug interfaces;
wherein the PM is adapted to obtain the present detection signal of the AMC through the hardware signal channel, determine to supply the function power on the load power channel assigned for the same plug interface as the hardware signal channel that provides the present detection signal according to the power configuration information provided and the present detection signal.

6. The general hardware platform according to claim 5, **characterized in that** the PM further comprises:
a power circuit, adapted to convert an input power to a converted power, the converted power comprising one or more function powers;
an enhanced module management controller (EMMC), adapted to obtain the power configuration information of the AMC via the second MB, determine the function power requirement of the AMC according to the obtained power configuration information, and generate a software control signal according to the determined function power requirement; and
a control circuit, adapted to obtain the present detection signal through the hardware signal channel connected to the AMC, supply the converted power to the load power channel assigned for the same plug interface as the hardware signal channel according to the software control signal from the EMMC.

7. The general hardware platform according to claim 6, **characterized in that** the EMMC obtains the present detection signal through the hardware signal channel and determines the function power requirement of the AMC according to the obtained power configuration information and the present detection signal.

8. The general hardware platform according to claim 6, **characterized in that**: the converted power further comprises the load power; the EMMC generates a software control signal adapted to control the load power output;
wherein the step of supplying the converted power to the load power channel assigned for the same plug interface as the hardware signal channel according to the software control signal from the EMMC is further comprising selecting to output the load power or the function power according to the software control signal and the present detection signal.

9. The general hardware platform according to claim 8, **characterized in that**: the hardware signal channel provided the present detection signal is assigned for the same plug interface as the first MB obtained power configuration information; the plug interface is adapted to the standard connector for the function AMC.

10. The general hardware platform according to claim 8, **characterized in that**: the hardware signal channel provided the present detection signal is assigned for the different plug interface comparing to the first MB obtained power configuration information; wherein one plug interface is located at a second auxiliary connector area of another plug interface or located at a third auxiliary connector area plug interface; said one plug interface and said another interface are further adapted to the AMC.

11. A general architecture system, comprising a general hardware platform and AMC, the AMC comprising a connector and a module management controller (MMC), the general hardware platform comprising a backplane, a MTCA Carrier Hub (MCH) and a power module (PM); **characterized in that**,
the backplane, adapted to provide a load power channel and a first management bus (a first MB) and a second management bus (a second MB), wherein the second MB is connected to the MCH and the PM;
the connector, adapted to be plugged on the backplane through at least one plug interface provided by the backplane;
the MMC, adapted to provide power configuration information for the MCH through the connector;
the MCH, adapted to obtain the power configuration information provided by the MMC via the first MB connected to the connector, and return the power configuration information to the PM via the second MB; and
the PM, adapted to determine function power requirements of the AMC according to the power configuration information, and supply a function power on the load power channel connected to the connector through the power channel according to the determined function power requirements.

12. The general architecture system according to claim 11, **characterized in that**: the backplane is further adapted to provide a hardware signal channels; and
the PM is further adapted to obtain the present detection signal of the AMC through the hardware signal channel, and determine to supply the function power on the load power channel assigned for the same plug interface as the hardware signal channel that provides the present detection signal according to the power configuration information and the present detection signal.

13. The general architecture system according to claim 12, **characterized in that**: the hardware signal channel that provides the present detection signal is assigned for the different plug interface comparing to the first MB obtained power configuration information;
wherein the connector comprises a stand connector and an auxiliary connector, the standard connector adapted to connect the first MB that provides power configuration information, the auxiliary connector adapted to connect the hardware signal channel that provides the present detection signal.

14. The general architecture system according to claim 12, **characterized in that**: the hardware signal channel provided the present detection signal is assigned for the same plug interface as the first MB obtained power configuration information;
the AMC further comprise a power conversion module, the power conversion module is adapted to convert the function power input by the connector, and the converted power includes the load power and the function power.

15. A power supply method for advanced mezzanine cards (AMC), comprising:
obtaining power supply requirement information of advanced mezzanine cards (AMC) plugged on the backplane through signal channels;
determining function power requirements of the AMC according to the power supply requirement information; and
supplying a function power to the AMC through the load power channels connected to the AMC according to the determined function power requirements.

16. The power supply method according to claim 15, **characterized in** further comprising: supplying the load power or the function power to the AMC through the load power channels connected to the AMC according to the determined function power requirements.

17. The power supply method according to claim 15 or 16, **characterized in that** the signal channels comprise a first MB and a second MB; the power supply requirement information comprises a power configuration information of the AMC; wherein the configuration information is obtained through the first MB.

18. The power supply method according to claim 17, **characterized in** further comprising:
converting an input power, the converted power comprising one or more function powers;
obtaining power configuration information of the AMC via the first MB connected to the AMC, and determining a function power requirement of the AMC according to the power configuration information;
generating a software control signal according to the determined function power requirement; and
supplying the converted power to the load power channel connected to the AMC according to the software control signal.
